# DEMANDE DE BREVET EUROPEEN

(11) **EP 2 254 088 A1**
(43) Date de publication de la demande: **24.11.2010**
(21) Numéro de dépôt: 10162040.9
(22) Date de dépôt: 05.05.2010
(51) Int. Cl.: G06Q 30/00

(54) **Dispositif et procédé de prédiction de commentaires associés à un produit**

(30) Priorité: 19.05.2009 FR 0953316
(71) Demandeur: France Telecom, 75015 Paris (FR)
(72) Inventeur: Geney, Stéphane, 22300, Lannion (FR); Meyer, Franck, 22300, Lannion (FR)

(57) **Abrégé**

L'invention se rapporte à un procédé de prédiction de commentaires sur un produit donné d'une liste prédéterminé de produits, dont une information est affichée sur un écran de visualisation, pour un utilisateur donné ayant un profil utilisateur stocké en mémoire et décrivant les préférences de l'utilisateur sur au moins une partie de la liste produit. Le procédé comporte les étapes suivantes:
- détermination (E200), à partir d'une base de données de profils utilisateurs, d'un ensemble de profils utilisateurs proches du profil de l'utilisateur donné;
- obtention (E201) d'une liste de commentaires pour ledit produit donné, des utilisateurs correspondant aux profils de l'ensemble déterminé;
- envoi (E202) à l'écran de visualisation, d'un nombre prédéterminé de commentaires de la liste obtenue, à afficher en association avec l'information sur le produit donné.

L'invention se rapporte également à un dispositif de prédiction de commentaires mettant en oeuvre le procédé tel que décrit et à un système de prédiction.

## Description

La présente invention se rapporte à un procédé de prédiction de commentaires associés à un produit en fonction de préférences utilisateurs.

Pour des applications de type vente en ligne de produits ou de services divers, un utilisateur consultant un produit avant son achat par exemple est intéressé par les commentaires éventuels que d'autres utilisateurs ont pu donner sur le produit en question.

Dans le cas où le nombre d'utilisateurs est important, le nombre de commentaires disponibles pour un même produit peut être également important. La consultation de tous les commentaires liés à un produit pour un utilisateur devient alors fastidieuse.

Il existe cependant certains systèmes, comme notamment celui que l'on trouve actuellement sur un site internet de vente en ligne www.amazon.fr, où une sélection de commentaires est effectuée sur un produit particulier afin de n'en afficher à l'utilisateur qu'un nombre réduit.

Pour pouvoir effectuer cette sélection, un commentaire associé à un produit est d'abord noté par différents utilisateurs qui doivent donner une note de pertinence du commentaire associé au produit.

Lorsque le commentaire en question a suffisamment de notes, il est alors possible de le classer avec différents commentaires d'un même produit et de sélectionner les commentaires jugés les plus pertinents par d'autres utilisateurs.

Cette sélection n'est cependant pas optimale. En effet, elle nécessite une phase préalable d'entrée de notes ou de scores de pertinence associés à chacun des commentaires avant de pouvoir effectuer une sélection. De plus, la sélection de commentaires à afficher pour un produit particulier, n'est pas nécessairement adaptée au ressenti réel de l'utilisateur sur le produit. Les commentaires affichés ne correspondent donc pas nécessairement à ce que l'utilisateur aurait pu mettre lui-même comme commentaire sur ce produit.

Il existe donc un besoin d'obtenir lors de la consultation d'une fiche produit par exemple ou lors du visionnage ou de l'écoute d'un contenu, une prédiction sur l'intérêt que le produit ou le contenu en question peut nous apporter. Un commentaire que l'utilisateur aurait pu lui-même faire sur ce produit donne à celui-ci une indication immédiate sur l'action qu'il est à même d'effectuer sur ce produit.

L'invention vient améliorer la situation.

A cet effet, l'invention se rapporte à un procédé de prédiction de commentaires sur un produit donné d'une liste prédéterminé de produits, dont une information est affichée sur un écran de visualisation, pour un utilisateur donné ayant un profil utilisateur stocké en mémoire et décrivant les préférences de l'utilisateur sur au moins une partie de la liste produit. Le procédé est tel qu'il comporte les étapes suivantes:
- détermination, à partir d'une base de données de profils utilisateurs, d'un ensemble de profils utilisateurs proches du profil de l'utilisateur donné;
- obtention d'une liste de commentaires pour ledit produit donné, des utilisateurs correspondant aux profils de l'ensemble déterminé;
- envoi à l'écran de visualisation, d'un nombre prédéterminé de commentaires de la liste obtenue, à afficher en association avec l'information sur le produit donné.

Ainsi, le procédé selon l'invention permet de fournir à l'utilisateur, un ou plusieurs commentaires prédits qui correspondent à ce qu'il pourrait penser lui-même du produit.

L'utilisateur a donc une information immédiate et concrète sur l'intérêt que peut lui porter le produit. Il n'est pas obligé de consulter une pluralité de commentaires pour trouver celui qui lui correspond. Cela lui procure donc un gain de temps considérable.

Les différents modes particuliers de réalisation mentionnés ci-après peuvent être ajoutés indépendamment ou en combinaison les uns avec les autres, avec les caractéristiques mentionnées ci-dessus.

Selon un mode de réalisation de l'invention, la détermination d'un ensemble de profils utilisateurs proches du profil de l'utilisateur donné comporte les étapes suivantes:
- prédiction d'une note d'intérêt pour le produit donné à partir du profil de l'utilisateur donné;
- détermination d'un ensemble d'utilisateurs en fonction d'un critère de correspondance entre la note d'intérêt prédite et des notes d'intérêts pour le produit donné des utilisateurs dont les profils sont stockés dans la base de données des profils utilisateurs.

Ainsi, l'utilisateur qui n'a pas encore donné de note d'intérêt sur un produit qu'il est par exemple en train de consulter sur un écran d'affichage, se voit afficher une note prédite en fonction de ses préférences et des commentaires prédits sur ce produit.

Ceci renforce encore plus l'information sur l'intérêt que peut avoir l'utilisateur sur ce produit.

Selon un mode particulier de réalisation, la détermination d'un ensemble de profils utilisateurs proches du profil de l'utilisateur donné comporte les étapes suivantes:
- calcul d'une distance entre des vecteurs produits représentant des notes d'intérêt sur les produits ou sur des caractéristiques de produits de la liste prédéterminé, pour les utilisateurs dont les profils sont stockés dans la base de données utilisateurs et le vecteur produit de l'utilisateur donné;
- détermination d'un ensemble d'utilisateurs pour lesquels la distance correspondante est inférieure à un seuil prédéterminé.

Ceci permet de faire de façon simple une comparaison des différents profils utilisateurs.

Ceci peut s'appliquer lorsque le profil utilisateur comporte une note d'intérêt global par produit ou encore lorsque le profil comporte des notes d'intérêt sur des caractéristiques ou descripteurs de produits, les vecteurs produits étant alors des vecteurs de descripteurs.

Les commentaires affichés pour un produit donné correspondent aux commentaires des utilisateurs qui ont des notes d'intérêt similaires voire identiques pour le produit que celle de l'utilisateur donné. Les commentaires sont donc en phase avec ce que peut penser l'utilisateur.

Dans un mode possible de réalisation, l'information affichée du produit est une fiche descriptive du produit.

Lors de la consultation d'une fiche produit, par exemple un DVD d'un film, l'utilisateur peut en même temps voir les commentaires sur ce film qui correspondent à ses opinions.

Dans un autre mode possible de réalisation, l'information affichée du produit fait partie d'une liste de produits recommandée à l'utilisateur.

En même temps qu'une recommandation de produits qui peuvent intéresser l'utilisateur, celui-ci peut lire les commentaires associés pour avoir un avis immédiat de l'intérêt du produit.

Dans encore un autre mode possible de réalisation, l'information affichée du produit est une publicité du produit.

Ainsi, l'utilisateur peut voir d'après les commentaires associés à la publicité, si le produit qui est visé peut l'intéresser, sans avoir d'actions supplémentaires à effectuer.

De nombreuses autres formes d'informations sur le produit peuvent ainsi être affichées.

Dans un mode de réalisation particulier, une note d'intérêt sur un produit donné est obtenue par l'intermédiaire d'une interface utilisateur agissant sur un indicateur d'intérêt représenté sur une fiche descriptive du produit.

On parle ainsi de mise à jour explicite des profils utilisateurs puisqu'ils comportent la note réelle que l'utilisateur a donnée pour un produit.

Dans un autre mode de réalisation particulier, une note d'intérêt sur un produit donné est déterminée par estimation, en fonction des actions de l'utilisateur vis-à-vis d'une information affichée du produit.

Ainsi, il est possible d'estimer la note qu'un utilisateur aurait mis pour un produit en tenant compte des actions que l'utilisateur effectue sur l'information qu'il obtient du produit. L'achat du produit, la consultation détaillée du produit ou bien par exemple l'arrêt de la visualisation d'une fiche produit donne une indication de l'intérêt que porte l'utilisateur sur le produit.

L'invention se rapporte aussi à un dispositif de prédiction de commentaires sur un produit donné d'une liste prédéterminé de produits, pour un utilisateur donné ayant un profil utilisateur stocké en mémoire et décrivant les préférences de l'utilisateur sur au moins une partie de la liste produit. Le dispositif est tel qu'il comporte:
- des moyens de détermination à partir d'une base de données de profils utilisateurs, d'un ensemble de profils utilisateurs proches du profil de l'utilisateur donné;
- des moyens d'obtention d'une liste de commentaires des utilisateurs correspondant aux profils de l'ensemble déterminé pour ledit produit donné;
- des moyens d'envoi à un écran de visualisation, d'un nombre prédéterminé de commentaires de la liste obtenue, à afficher en association avec une information sur le produit donné.

Ce dispositif peut être inséré dans un serveur, typiquement, un serveur de gestion d'application sur des produits de vente en ligne, de location, de consultation ou de diffusion.

L'invention se rapporte également à un système de prédiction de commentaires comportant un dispositif de prédiction tel que décrit ci-dessus et un terminal multimédia comportant un écran de visualisation apte à afficher le nombre prédéterminé de commentaires en association avec une information sur le produit donné.

Le terminal multimédia peut être par exemple un ordinateur, un lecteur de fichiers multimédias, un téléphone mobile, un décodeur TV associé à un écran de télévision ou plus généralement tout équipement multimédia.

Une interface adaptée pour l'écran de visualisation est telle qu'elle comporte une fenêtre d'information sur le produit et une fenêtre affichant le nombre prédéterminé de commentaires ainsi qu'un espace dédié à une entrée, via une interface utilisateur, de commentaires de l'utilisateur.

Enfin, l'invention se rapporte un programme informatique comportant des instructions de code pour la mise en oeuvre d'un procédé de prédiction de commentaires tel que décrit, lorsque celles-ci sont exécutées par un processeur.

D'autres caractéristiques et avantages de l'invention apparaîtront plus clairement à la lecture de la description suivante, donnée uniquement à titre d'exemple non limitatif, et faite en référence aux dessins annexés, sur lesquels:
- la figure 1 illustre un système de prédiction de commentaires comportant un dispositif de prédiction de commentaires selon un mode de réalisation de l'invention;
- la figure 2 illustre sous forme d'organigramme, les étapes du procédé de prédiction de commentaires selon un mode de réalisation de l'invention;
- la figure 3a illustre un exemple du contenu de la base de données produits selon un mode de réalisation de l'invention;
- la figure 3b illustre un exemple du contenu de la base de données des profils utilisateurs selon un mode de réalisation de l'invention;
- la figure 3c illustre des exemples de notes pour des usages utilisateur, stockées dans la base de données des profils utilisateurs;
- la figure 4 illustre un premier exemple d'application de l'invention pour une recommandation de produits; et
- la figure 5 illustre un deuxième exemple d'application de l'invention lors d'une consultation d'une fiche descriptive de produit.

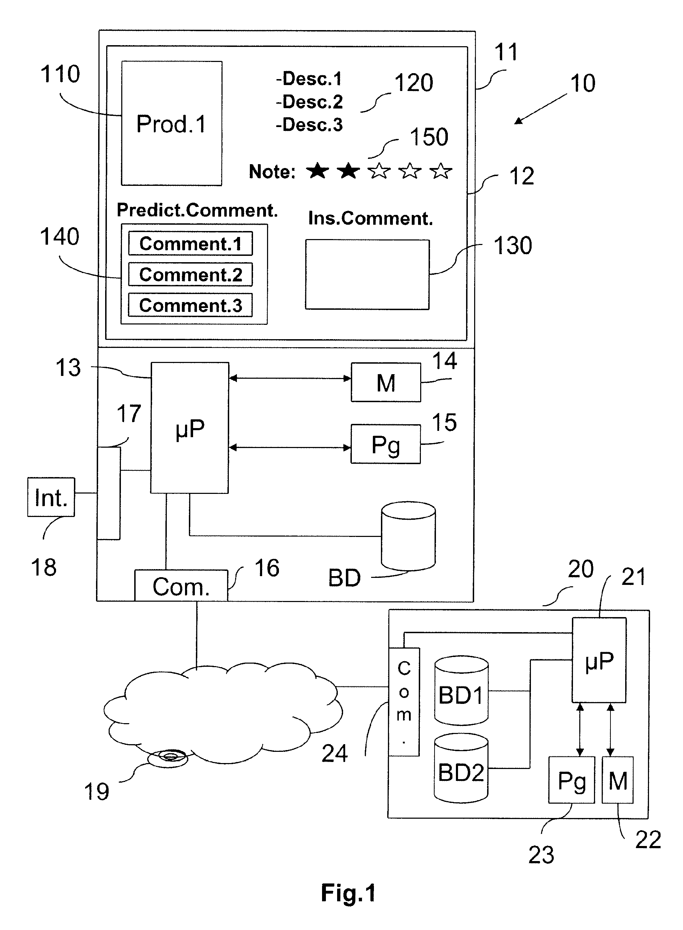

La figure 1 représente un système de prédiction de commentaires comportant un dispositif de prédiction de commentaires 20 sur un produit donné faisant partie d'une liste prédéterminée de produits, par exemple une liste de produits d'un catalogue de produits de vente en ligne, d'un catalogue de contenus multimédias à louer ou à acheter, ou tout autre produits dont les informations peuvent être affichés sur un écran de visualisation.

Typiquement, ce dispositif peut être intégré dans un ordinateur, dans un serveur de gestion d'application sur les produits prédéterminés, par exemple un serveur de vente en ligne ou un serveur de diffusion de contenus multimédias.

Un terminal multimédia 10 connecté au serveur ou dispositif de prédiction via une interface de communication 16 et un réseau de communication 19, est apte à transférer des informations sur un utilisateur donné utilisant le terminal et sur les données qu'il peut donner et à afficher des informations concernant les produits en provenance du dispositif 20 sur son écran de visualisation 11.

Ce terminal multimédia est par exemple un ordinateur, un décodeur TV associé à un écran de télévision, un lecteur de fichiers multimédia ou encore un terminal de communication tel qu'un téléphone mobile.

Le terminal 10 comprend donc un écran de visualisation 11 sur lequel est affiché par exemple une interface graphique 12 comportant sur cet exemple, la description d'un produit particulier ici Prod.1. Ce produit est décrit par un affichage par exemple une photo du produit en 110 et de quelques mots de descriptions du produit en 120.

Une note d'intérêt sur le produit affiché peut être mise à jour par l'utilisateur en 150. Cette note d'intérêt est ici représentée par des étoiles qui deviennent pleine lorsque le curseur d'une interface utilisateur se place dessus. Plus il y a d'étoiles pleines, plus l'intérêt pour le produit est grand.

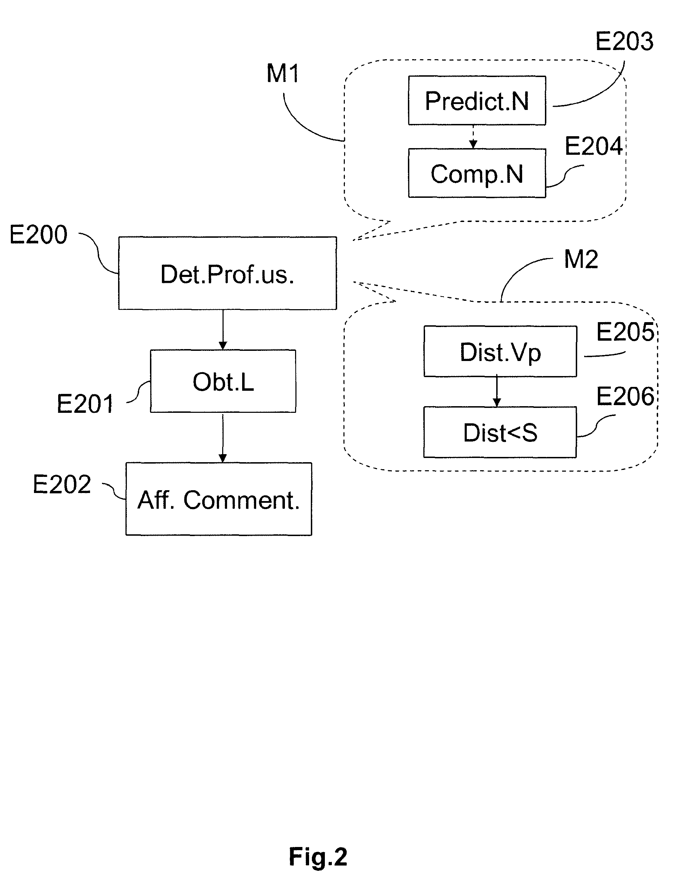

Cette note d'intérêt peut également être affichée à l'utilisateur selon une prédiction de note qui est faite par le dispositif 20 selon l'invention et comme décrit ultérieurement en référence à la figure 2.

L'interface graphique comporte ici une fenêtre comportant un certain nombre de commentaires prédits qui correspondent à ce que l'utilisateur peut penser du produit. La sélection des commentaires ainsi affichés est effectuée selon un procédé de prédiction de commentaires qui sera décrit en référence à la figure 2.

L'interface graphique comporte également une fenêtre 130 où l'utilisateur peut insérer lui-même ses commentaires sur le produit affiché. Les commentaires ainsi insérés sont enregistrés dans une base de données interne BD du dispositif et peuvent être transférés via le réseau 19 à une base de données produits BD1 hébergée sur le serveur ou dispositif 20.

Le terminal 10 comporte en outre une unité de traitement 13 munie d'un microprocesseur, reliée à une mémoire 14. L'unité de traitement est pilotée par un programme informatique qui permet la gestion des différentes applications du terminal.

L'unité de traitement reçoit via un module d'entrée 17, des instructions d'une interface utilisateur 18, par exemple une souris d'ordinateur ou tout autre moyen de sélection par l'utilisateur sur l'écran de visualisation. L'unité de traitement reçoit donc par exemple la note d'intérêt attribuée par l'utilisateur ou encore les commentaires insérés pour le produit affiché.

Il peut également recevoir des instructions d'actions telles que l'achat du produit, le passage à une autre fenêtre de visualisation ou toute autre action possible provenant de l'interface.

Le dispositif comprend une base de données interne BD pouvant mémoriser des informations sur l'utilisateur, sur les actions qu'il peut effectuer ou sur les informations qu'il peut insérer sur un produit.

Ces informations sont ensuite transférées à des bases de données distantes, sur le serveur 20 accessible par le dispositif 10 via le module de communication 16 et le réseau de communication 19.

Ces informations permettent de mettre à jour une base de données produits BD1 répertoriant des informations sur un nombre prédéterminé de produits et une base de données de profils utilisateurs BD2, répertoriant les préférences sur les produits de différents utilisateurs.

D'autres types de mémoire peuvent bien entendu être envisagés comme des supports mémoire amovibles.

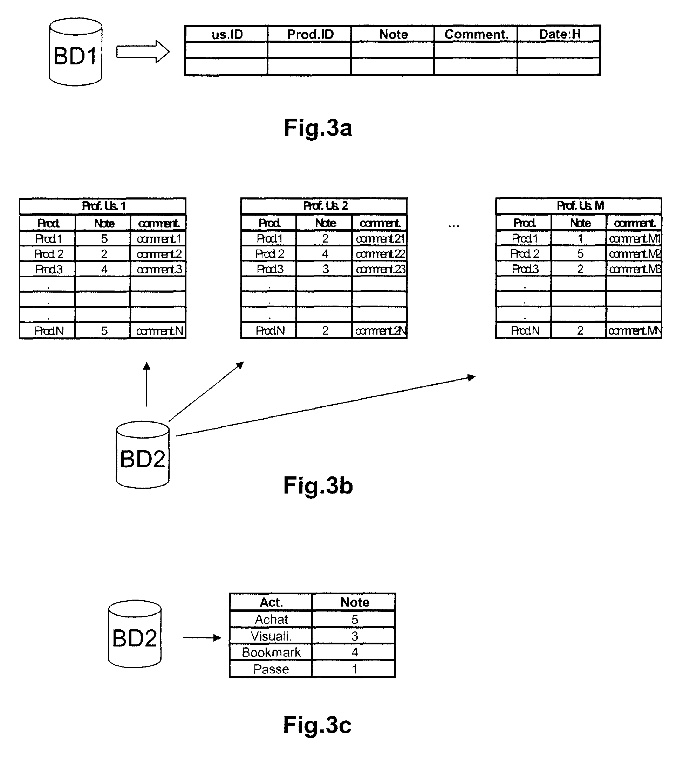

Les figures 3a, 3b et 3c représentent des exemples de contenus de ces bases de données.

Le dispositif ou serveur 20 selon l'invention, hébergeant les bases de données BD1 et BD2, comporte une unité de traitement 21 munie d'un microprocesseur, reliée à une mémoire 22.

L'unité de traitement est pilotée par un programme informatique 23 afin de mettre en oeuvre notamment le procédé de prédiction de commentaires selon un mode de réalisation de l'invention décrit ultérieurement en référence à la figure 2.

Le programme informatique comporte des instructions de code pour mettre en oeuvre les étapes du procédé de prédiction de commentaires et notamment les étapes de:
- détermination à partir d'une base de données de profils utilisateurs, d'un ensemble de profils utilisateurs proches du profil de l'utilisateur donné;
- obtention d'une liste de commentaires pour ledit produit donné, des utilisateurs correspondant aux profils de l'ensemble déterminé;
- envoi à un écran de visualisation, d'un nombre prédéterminé de commentaires de la liste obtenue, à afficher en association avec une information sur le produit donné.

Le programme informatique peut également être stocké sur un support mémoire amovible ou non, lisible par un lecteur ou un processeur du serveur ou téléchargeable dans l'espace mémoire de celui-ci.

Le serveur 20 identifie l'utilisateur du terminal 10 par une phase d'authentification classique qui ne sera pas détaillée ici.

Pour cet utilisateur authentifié, un profil utilisateur existe dans la base de données de profils utilisateurs BD2. Ce profil utilisateur décrit les préférences de l'utilisateur sur au moins une partie de la liste de produit du service mis en oeuvre par le serveur.

Ce serveur comprend ainsi, des moyens de détermination d'un ensemble de profils utilisateurs parmi les profils utilisateurs de la base de données de profils qui sont proches du profil de l'utilisateur authentifié.

La détermination de cet ensemble de profils proches sera détaillée ultérieurement en référence à la figure 2.

Le serveur 20 comprend des moyens d'obtention d'une liste de commentaires provenant des utilisateurs dont les profils ont été déterminés comme proches, pour un produit donné, notamment celui qui est affiché sur l'écran du terminal 10.

Le produit donné peut également être celui correspondant à un produit à recommander à l'utilisateur selon un processus de recommandation de produits en fonction du profil utilisateur.

Enfin, le serveur 20 comporte des moyens d'envoi d'informations via le module de communication 24 et le réseau 19, à afficher sur l'écran de visualisation du terminal 10. Ces informations comportent un nombre prédéterminé de commentaires de la liste obtenue par les moyens d'obtention et des informations sur le produit lui-même comme par exemple la fiche descriptive du produit ou la recommandation du produit ou encore simplement la diffusion du contenu relatif au produit.

Ainsi, l'utilisateur du terminal 10 peut visualiser les commentaires qui lui correspondent, en même temps que l'information sur le produit lui-même.
La figure 2 représente les étapes principales d'un procédé de prédiction de commentaires sur un produit donné et un utilisateur donné mis en oeuvre par exemple sur un serveur tel que décrit en référence à la figure 1.
La figure 2 représente également deux modes possibles M1 et M2 de réalisation de l'étape E200.

L'étape E200 est une étape de détermination d'un ensemble de profils utilisateurs proches du profil de l'utilisateur donné et authentifié lors d'une première phase d'authentification non décrite ici.

Les profils utilisateurs sont stockés dans une base de données utilisateurs BD2 dont un exemple de contenus sera décrit ultérieurement en référence à la figure 3b.

Dans un premier mode de réalisation M1, cette étape E200 comprend une étape de prédiction E203 d'une note d'intérêt de l'utilisateur donné pour le produit donné à partir du profil de l'utilisateur. Pour cela, une analyse du profil de l'utilisateur est faite pour connaître les notes d'intérêt que l'utilisateur a déjà donné pour d'autres produits. Une telle prédiction de note d'intérêt est par exemple décrit dans un document décrivant une recommandation à base de filtrage collaboratif intitulé "Understanding and Improving automated Collaborative Filtering Systems"; PhD dissertation, university of Minnesota, 2000 de l'auteur "Jonathan Lee Herlocker".

Une étape E204 est ensuite effectuée pour comparer cette note prédite pour le produit donné et les notes pour le même produit, des utilisateurs dont le profil est enregistré dans la base de données de profils utilisateurs.

Un critère de correspondance entre les notes est défini. Ce critère peut être simplement un critère d'égalité entre les notes ou encore un critère d'écart d'une ou plusieurs unités selon la note maximale qu'un utilisateur peut donner sur un produit.

Les notes d'intérêt remplissant ce critère de correspondance sont retenues et déterminent ainsi un ensemble d'utilisateurs dont le profil est proche de l'utilisateur donné.

Dans un autre mode de réalisation M2, l'étape E200 comprend une étape E205 de calcul d'une distance entre des vecteurs produits des différents utilisateurs dont les profils sont enregistrés dans la base de données utilisateurs. Ces vecteurs produits représentent les notes d'intérêts enregistrés sur les produits répertoriés dans la base produits BD1.

Ce vecteur produit peut également, dans une variante de réalisation, correspondre à des notes d'intérêts donnés sur des caractéristiques de produits et non sur le produit global.

Dans les deux cas, à chaque utilisateur correspond un vecteur produit.

Le calcul de la distance entre le vecteur produit de l'utilisateur donné et celui des autres utilisateurs, s'effectue par produit scalaire des vecteurs.

Un seuil S est déterminé pour définir la distance maximale que l'on peut autoriser selon le type d'application mis en oeuvre sur les produits.

Une étape E206 est ensuite mise en oeuvre pour comparer les distances calculées au seuil S défini et ne sélectionner que les utilisateurs correspondants aux distances inférieures au seuil. Ces utilisateurs ainsi sélectionnés correspondent donc aux utilisateurs dont les profils sont proches du profil de l'utilisateur donné.

L'étape E200 est suivie d'une étape E201 d'obtention d'une liste L de commentaires des utilisateurs déterminés à l'étape précédente pour le produit donné.

Il n'y a pas forcément un commentaire associé à chaque utilisateur et à chaque produit. Cela dépend de ce qu'ont inséré les utilisateurs lors de leurs précédentes consultations du service.

S'il n'existe pas de commentaires associés à cette liste d'utilisateurs, il est alors possible de revenir sur la détermination des profils proches pour autoriser un seuil de décision plus large, soit selon le mode de réalisation 1 en autorisant un écart plus grand entre les notes, soit selon le mode de réalisation M2 en augmentant le seuil S.

Un nombre prédéterminé de commentaires de la liste L sont envoyés au terminal 10 à l'étape E202, pour y être affiché sur l'écran de visualisation avec une information sur le produit correspondant. Un nombre réduit de 1 à 3 commentaires est par exemple choisi pour réduire l'espace de visualisation et restreindre le nombre d'informations que l'utilisateur doit lire.

Dans le cas du mode de réalisation M1, la note prédite est également envoyée pour affichage avec l'information sur le produit.

L'utilisateur a donc immédiatement une indication sur l'intérêt du produit qu'il consulte ainsi qu'un avis qui lui correspond.

Il peut donc décider très rapidement de l'action qu'il peut faire sur ce produit.

Un exemple de données contenues dans les bases de données BD1 et BD2 telles que décrites en référence à la figure 1 est maintenant décrit.

En référence à la **figure 3a****,** une base de données BD1 contenant les données sur les produits et commentaires associés est illustrée.

Cette base de données est ici représentée sous forme d'un tableau répertoriant dans une première colonne, les identifiants d'utilisateurs (Us.ID), dans une deuxième colonne, les identifiants des produits (prod.ID), dans une troisième colonne, les notes d'intérêt sur les produits (Note), dans une quatrième colonne, le cas échéant, les commentaires associés et dans une cinquième colonne, optionnelle la date et l'heure des entrées de commentaires (date:H).

Cette base de données est ici donnée à titre indicatif, elle peut bien sûr comporter plus d'informations sur le produit par exemple un certain nombre de descripteurs et des notes d'intérêts associés à ces descripteurs. Elle peut être représentée sous toute autre forme que celle d'un tableau.

En référence à la figure 3b, nous allons à présent décrire un exemple de contenu de la base de données BD2 contenant les profils utilisateurs.

Ici trois tables définissant chacune un profil utilisateur sont illustrées (Prof.Us.1, Prof.Us.2 et Prof. Us.M). Dans chacune des tables, une première colonne répertorie les différents produits du service mis en oeuvre par le serveur. Cette liste comprend ici N produits (Prod.1, ..., Prod.N). Une deuxième colonne associe une note d'intérêt au produit correspondant. Cette note va ici d'une valeur allant de 1 à 5 mais peut bien évidemment prendre tout autre type de valeurs ou de plage de valeurs et notamment des valeurs négatives.

Une troisième colonne, répertorie ici les commentaires qui ont été insérés par l'utilisateur pour les produits correspondants.

Le profil utilisateur peut ne pas comporter cette colonne de commentaires. Les commentaires peuvent faire partie d'une base de données de commentaires, indépendante de celle des profils utilisateurs. On peut également retrouver les commentaires associés aux produits et aux utilisateurs dans la base de données de produits BD1.

Ainsi, un vecteur produit tel que utilisé dans le mode M2 décrit en référence à la figure 2 est ici pour l'utilisateur 1, le vecteur V1=(5, 2, 4, ..., 5), pour l'utilisateur 2, le vecteur V2=(2, 4, 3, ..., 2) et pour l'utilisateur M, le vecteur VM=(1, 5, 2, ..., 2).

Ces profils utilisateurs sont mis à jour dès qu'un utilisateur apporte un nouvel élément comme un nouveau commentaire ou une note d'intérêt sur un produit.

Cette note d'intérêt sur un produit particulier peut être directement obtenue suite à l'action de l'utilisateur via son interface utilisateur sur un indicateur d'intérêt représenté sur une fiche descriptive du produit comme par exemple le cas illustré en figure 1.

Cette note d'intérêt peut dans un autre mode de réalisation, être estimée à partir d'actions que l'utilisateur peut effectuer suite à l'affichage d'une information sur le produit.

Pour un type d'action donné, une note est définie selon le tableau représenté en référence à la figure 3c. Ainsi, un exemple de note donné pour l'action "achat" est de 5 selon la figure 3c. Pour une action de visualisation, une note de 3 est attribuée, pour une action d'enregistrement de la fiche produit dans les favoris de l'utilisateur "bookmark", la note est de 4 et pour l'action de passage au produit suivant "passe" ou arrêt de la visualisation du contenu, la note est de 1.

Ces attributions de note sont bien évidemment des exemples de réalisation possibles. Toutes autres valeurs de notes sont possibles et d'autres types d'actions sont également envisageables.

Ces attributions de notes servent à mettre à jour les profils utilisateurs de manière implicite.

Ainsi, les usages que l'utilisateur a lors de la consultation d'une fiche produit par exemple, sont répertoriés. Une note relative à chaque action est associée au produit et à l'utilisateur correspondant en fonction des notes définis dans le tableau 3c. Le vecteur produit de l'utilisateur est ainsi défini et la note par produit, de la deuxième colonne du profil utilisateur est mise à jour.

La mise à jour du profil effectuée de manière implicite est faite de façon transparente pour l'utilisateur.

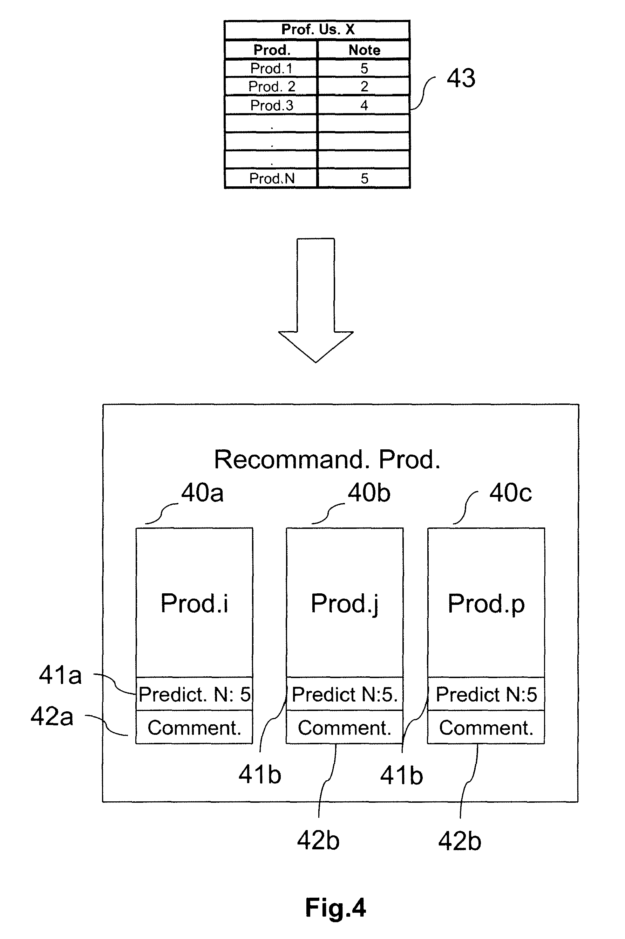

Un exemple de mise en oeuvre du procédé de prédiction de commentaires est décrit maintenant en référence à la **figure 4****.**

A partir du profil de l'utilisateur X représenté en 43, répertoriant les notes d'intérêt pour N produits, une recommandation de produits correspondant au profil utilisateur, est effectuée. Un exemple possible de mise en oeuvre du processus de recommandation à partir d'un profil utilisateur est décrit dans le document intitulé "Toward the next Generation of recommander Systems: a survey of the state-of-the-art and Possible extensions", IEEE Transactions on Knowledge and Data Engineering, vol 17 (6):734-749, ISSN 1041-4347, par les auteurs Gediminas Adomavicius et Alexander Tuzhilin.

L'utilisateur se voit afficher ainsi une représentation 40a, 40b et 40c de produits respectifs Prod.i, Prod.j et Prod.p, qui correspondent à son profil. En plus des produits ainsi affichés, le procédé de prédiction décrit en référence à la figure 2 permet d'afficher en association avec ces informations sur les produits, des commentaires qui correspondent également au profil de l'utilisateur. Ces commentaires sont affichés en 42a, 42b et 42c pour les produits respectifs. Un seul commentaire, correspondant à l'utilisateur ayant un profil le plus proche de l'utilisateur X est ici affiché. Un nombre supérieur à 1 peut bien sûr être affiché.

Dans le cas du mode de réalisation M1 décrit en référence à la figure 2, une note prédite peut également être affichée en 41 a, 41b et 41c, en association avec le produit et le commentaire. L'utilisateur est ainsi informé de façon précise sur l'intérêt que peut lui porter les produits ainsi recommandés.

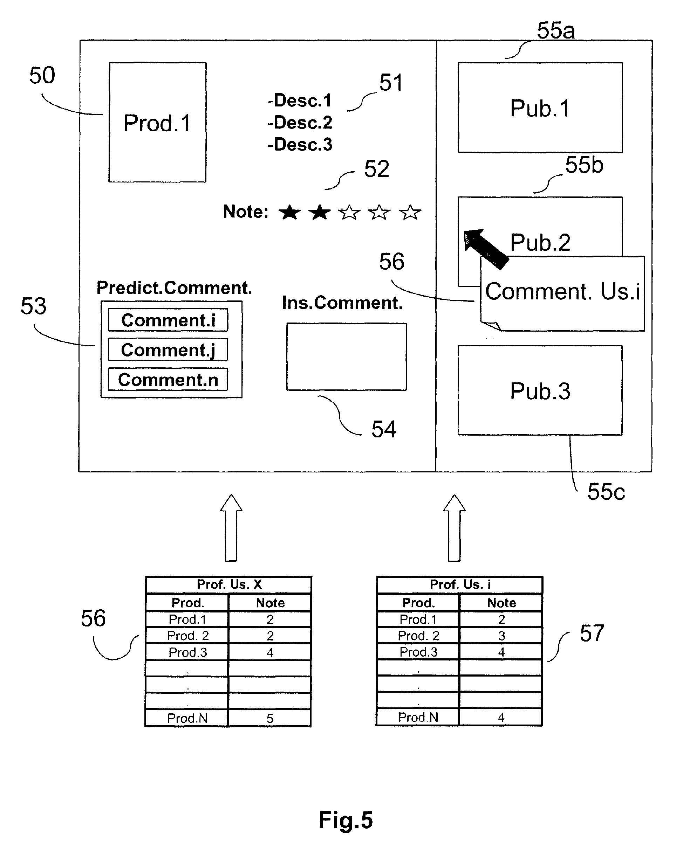

Dans un autre exemple possible d'application de l'invention, la figure 5 illustre une interface graphique qui peut être affiché sur l'écran du terminal 10 tel que décrit en référence à la figure 1.

Cette interface comporte une représentation 50 d'un produit, ici Prod. 1 et des annotations en 51, décrivant le produit. Une note sur le produit est affichée en 52 soit par prédiction de note comme décrit en figure 2 soit par configuration de l'utilisateur lui même.

Des commentaires prédits sont également affichés selon le procédé de prédiction décrit en référence à la figure 2. Ici, les commentaires affichés sont ceux des utilisateurs i, j et n qui ont donc des profils utilisateurs proches du profil de l'utilisateur X consultant cette fiche produit.

Les profils des utilisateurs X et i sont représentés en 56 et 57 sur cette figure 5.

Dans la partie droite de l'interface graphique, une fenêtre affiche différentes publicités (Pub.1, Pub.2 et Pub.3) respectivement en 55a, 55b et 55c. Ces publicités sont de préférence en relation avec le produit Prod.1 affiché et peuvent être des publicités recommandées à l'utilisateur X selon un processus de recommandation connu.

En cliquant à l'aide de son interface utilisateur sur la représentation 55b de la publicité 2, l'utilisateur X voit un commentaire, Comment.Us.i, s'afficher. Ce commentaire correspond à celui d'un utilisateur i qui a donné son avis sur cette publicité et dont le profil utilisateur correspond à celui de l'utilisateur X. En effet, lorsqu'on compare les profils de l'utilisateur X et celui de l'utilisateur i, on peut voir qu'une même note a été donné pour les deux utilisateurs, sur le produit 1 affiché.

Le commentaire en liaison avec la publicité affichée, est sélectionné selon le procédé de prédiction de commentaires décrit en référence à la figure 2, pour des produits comprenant les produits visés dans ces publicités.

Beaucoup de cas d'application de l'invention décrite précédemment sont envisageables. Les exemples décrits ci-dessus ne sont pas limitatifs et ne donnent qu'un aperçu du type d'applications possibles.

## Revendications

1. Procédé de prédiction de commentaires sur un produit donné d'une liste prédéterminé de produits, dont une information est affichée sur un écran de visualisation, pour un utilisateur donné ayant un profil utilisateur stocké en mémoire et décrivant les préférences de l'utilisateur sur au moins une partie de la liste produit, **caractérisé en ce qu'**il comporte les étapes suivantes:
- détermination (E200), à partir d'une base de données de profils utilisateurs, d'un ensemble de profils utilisateurs proches du profil de l'utilisateur donné;
- obtention (E201) d'une liste de commentaires pour ledit produit donné, des utilisateurs correspondant aux profils de l'ensemble déterminé;
- envoi (E202) à l'écran de visualisation, d'un nombre prédéterminé de commentaires de la liste obtenue, à afficher en association avec l'information sur le produit donné.

2. Procédé selon la revendication 1, **caractérisé en ce que** la détermination d'un ensemble de profils utilisateurs proches du profil de l'utilisateur donné comporte les étapes suivantes:
- prédiction (E203) d'une note d'intérêt pour le produit donné à partir du profil de l'utilisateur donné;
- détermination (E204) d'un ensemble d'utilisateurs en fonction d'un critère de correspondance entre la note d'intérêt prédite et des notes d'intérêts pour le produit donné des utilisateurs dont les profils sont stockés dans la base de données des profils utilisateurs.

3. Procédé selon la revendication 1, **caractérisé en ce que** la détermination d'un ensemble de profils utilisateurs proches du profil de l'utilisateur donné comporte les étapes suivantes:
- calcul (E205) d'une distance entre des vecteurs produits représentant des notes d'intérêt sur les produits ou sur des caractéristiques de produits de la liste prédéterminé, pour les utilisateurs dont les profils sont stockés dans la base de données utilisateurs et le vecteur produit de l'utilisateur donné;
- détermination (E206) d'un ensemble d'utilisateurs pour lesquels la distance correspondante est inférieure à un seuil prédéterminé.

4. Procédé selon la revendication 1, **caractérisé en ce que** l'information affichée du produit est une fiche descriptive du produit.

5. Procédé selon la revendication 1, **caractérisé en ce que** l'information affichée du produit fait partie d'une liste de produits recommandée à l'utilisateur.

6. Procédé selon la revendication 1, **caractérisé en ce que** l'information affichée du produit est un publicité du produit.

7. Procédé selon la revendication 2, **caractérisé en ce qu'**une note d'intérêt sur un produit donné est obtenue par l'intermédiaire d'une interface utilisateur agissant sur un indicateur d'intérêt représenté sur une fiche descriptive du produit.

8. Procédé selon la revendication 2, **caractérisé en ce qu'**une note d'intérêt sur un produit donné est déterminée par estimation, en fonction des actions de l'utilisateur vis-à-vis d'une information affichée du produit.

9. Dispositif de prédiction de commentaires sur un produit donné d'une liste prédéterminé de produits, pour un utilisateur donné ayant un profil utilisateur stocké en mémoire et décrivant les préférences de l'utilisateur sur au moins une partie de la liste produit, **caractérisé en ce qu'**il comporte:
- des moyens de détermination (21) à partir d'une base de données de profils utilisateurs (BD2), d'un ensemble de profils utilisateurs proches du profil de l'utilisateur donné;
- des moyens d'obtention (21, BD1, BD2) d'une liste de commentaires des utilisateurs correspondant aux profils de l'ensemble déterminé pour ledit produit donné;
- des moyens d'envoi (24) à un écran de visualisation, d'un nombre prédéterminé de commentaires de la liste obtenue, à afficher en association avec une information sur le produit donné.

10. Système de prédiction de commentaires **caractérisé en ce qu'**il comporte un dispositif de prédiction (20) conforme à la revendication 9 et un terminal multimédia (10) comportant un écran de visualisation (11) apte à afficher le nombre prédéterminé de commentaires en association avec une information sur le produit donné.

11. Système de prédiction selon la revendication 10, **caractérisé en ce que** le terminal multimédia comporte une interface graphique affiché sur l'écran de visualisation comportant une fenêtre d'information sur le produit et une fenêtre affichant le nombre prédéterminé de commentaires ainsi qu'un espace dédié à une entrée, via une interface utilisateur, de commentaires de l'utilisateur.

12. Programme informatique comportant des instructions de code pour la mise en oeuvre d'un procédé de prédiction de commentaires conforme à l'une des revendications 1 à 8, lorsque celles-ci sont exécutées par un processeur.
